# EUROPÄISCHE PATENTANMELDUNG

(11) **EP 2 110 568 A2**
(43) Veröffentlichungstag der Anmeldung: **21.10.2009**
(21) Anmeldenummer: 09158073.8
(22) Anmeldetag: 16.04.2009
(51) Int. Cl.: F16C 7/04, F02B 75/04

(54) **Pleuelstange**

(30) Priorität: 16.04.2008 DE 102008001206
(71) Anmelder: Gentsch, Horst, 30455 Hannover (DE)
(72) Erfinder: Gentsch, Horst, Prof. Dr., 30455 Hannover (DE); Gentsch, Dietmar, Dipl.-Ing., 30455 Hamburg (DE)
(74) Vertreter: Gille Hrabal Struck Neidlein Prop Roos

(57) **Zusammenfassung**

Die Federpleuelstange ist eine Konstruktion aus einem Stück und dennoch längenveränderlich. Die Pleuelstange ist im Abschnitt unter dem kleinen Pleuelauge als Dehnzylinder ausgeführt, um hoher Flächenpressung durch wachsenden Durchmesser des Druckstempels bei großer Kraft ausweichen zu können. Um das Biegemoment am Kolbenbolzen zu reduzieren, sorgt die Arretierlastbrücke mit ihren verstärkten Enden für die Teilung der Kraft, die vom Gasdruck auf den Kolben über den Kolbenbolzen auf den Druckstempel übertragen wird. Der große Hub der Hydrofeder erlaubt neue Verfahren zur motorischen Verbrennung in Kolbenmaschinen zur Verbesserung des thermischen Wirkungsgrades bei weniger Schadstoffausstoß. Bei jeder Umdrehung reagiert daher das erfindungsgemäße Federpleuel mit variabler Verdichtung auf den Last- bzw. Betriebszustand des Motors. Klopfen bzw. Nageln beim Otto- bzw. Dieselmotor wird verhindert.

## Beschreibung

Die Erfindung betrifft eine Pleuelstange und insbesondere eine Pleuelstange zur Übertragung von Energie zwischen einem Kolben und einer Kurbelwelle einer Hubkolbenmaschine.

DE 195 30 191, DE 198 35 146 A1, WO 2005/049990, DE 103 53 396 A1, CH 252 208, GB 21 61 580 A und WO 02/10568 A1 betreffen Pleuelstangen, bei denen das obere Pleuelauge gegenüber dem unteren Pleuelauge in Pleuelstangenlängsrichtung gegen die Kraft eines Energiespeichers zusammendrückbar sind, um beim Einsatz in einer Verbrennungskraftmaschine eine Erhöhung des oberen Totraums zu bewirken. Als Energiespeicher werden dabei Federn oder Fluide, insbesondere Motoröle vorgeschlagen.

DE 198 35 146 A1 offenbart dabei eine Fluidfeder, wobei ein System von Versorgungskammern und Kanälen und Rückschlagventilen eingesetzt wird um Leckageverluste auszugleichen Den oben genannten Pleuelstangen ist gemein, dass das obere Pleuelauge nach dem "Kolben im Zylinder" Prinzip mit der Pleuelstange verbunden ist und die Pleuelsange entsprechend anfällig bei durch Flieh- und Trägheitskräfte verursachten Querbelastungen ist. Der Einsatz von Federn, wie z. B. Stahl-Spiralfedern ist kritisch, da diese wegen der erforderlichen hohen Kräfte entsprechend schwer ausfallen müssen und daher unerwünschterweise das Gewicht des sich schnell bewegenden Pleuels weiter erhöhen.

DE 102 006 042 072 beschreibt daher eine Pleuelstange aus einem Stück mit einer längenveränderlichen Funktion. Die Abdichtung des Druckstempels in der axialen zylindrischen Schaftausnehmung in der Pleuelstange gegen Leckage. Wegen der bis viele kbar ansteigenden Drücke sind selbst Hochdruckdichtstoffe zu labil, weshalb nur eine Ausführung als enge Spielpassung in betracht kommt, die nachteilhafterweise beim Ansteigen der Kräfte im Arbeitshub des Kolbenmotors in eine Pressgleitpassung übergeht. Die Ursache ist die Zunahme des Druckstempeldurchmessers durch Stauchung bei großer axialer Kraft von bis zu einigen 10⁴ N. Die resultierende Flächenpressung übersteigt dann den zulässigen Grenzwert und führt zur Zerstörung des Pleuels. Daran sind vermutlich die aus dem Stand der Technik bekannten Federpleuelkonstruktionen in der Erprobung gescheitert. Auch hochfeste Materialien halfen bei Versuchen nicht weiter.

Es ist daher Aufgabe der vorliegenden Erfindung, eine verbesserte Pleuelstange bereitzustellen.

Diese Aufgabe wird gelöst durch eine Pleuelstange gemäß Anspruch 1. Vorteilhafte Ausgestaltungen sind Gegenstand der Unteransprüche.

Erfindungsgemäß ist eine durchgehende Pleuelstange vorgesehen, zusammen mit einem sich in der Längsachsenrichtung der Pleuelstange erstreckenden länglichen oberen Pleuelauge, vorzugsweise ein Langloch, in das zum Beispiel der Bolzen des Kolbens federnd gelagert werden kann. Die Geometrie des Langlochs wird zur Seite hin bestimmt durch den Durchmesser des einzusetzenden Kolbenbolzens und vertikal durch die Summe aus Durchmesser des Kolbenbolzens zuzüglich gewünschtem Federweg zur Erreichung der gewünschten Erhöhung des Totraums. Ein längliches Pleuelauge im Sinne der Erfindung ermöglicht einem darin eingesetzten Kolbenbolzen eine Relativbewegung in Bezug auf die Pleuelstange in eine bestimmte Richtung - insbesondere der Pleuelstangenlängsrichtung - zur gewünschten Erhöhung des Totraums. In das längliche Pleuelauge können dazu federnde Elemente, z. B. aufgabengemäß geeignete kompressible Materialien eingesetzt sein. Diese können erfindungsgemäß sogar nur in das Pleuelauge eingesetzt sein, so dass eine nach oben offene Schaftausnehmung zur Aufnahme eines Druckstempels, die später erläutert wird, sogar entbehrlich sein kann. Das Federelement kann auch von der Seite in eine seitlich offene Schaftausnehmung montiert werden.

Erfindungsgemäß ist ein in die Schaftausnehmung eingesetzter Druckstempel vorgesehen. Um die Montierbarkeit zu gewährleisten muss der Druckstempel derartig tief in die nach oben offene Schaftausnehmung, gegebenenfalls unter Weglassung der Feder, eingesetzt werden können, dass der Querschnitt des oberen Pleuelauges oder Langlochs zumindest das Einschieben des Kolbenbolzens ermöglicht. Auch kann die Schaftausnehmung zusätzlich nach unten, d. h. im Bereich der Halbschale des unteren großen Pleuelauges offen sein, und später verschlossen werden, wie unten ausgeführt.

Die Lösung des bei DE 102 006 042 072 auftretenden Problems überhöhter Flächen-und Gleitpressung zwischen im Betrieb gestauchten Druckstempel und Schaftausnehmung mit der Folge der Zerstörung der Gleitflächen, erfordert eine Senkung der Flächenpressung.

Als Neuerung wird erfindungsgemäß vorgeschlagen, die den Druckstempel in Betriebsposition umgebende Zylinderwand der Schaftausnehmung und/oder den Druckstempel derart auszubilden und aufeinander abzustimmen , dass diese im Betrieb unter der durch die Stauchung des Druckstempels verursachten hohen Flächenpressung sich so verformen, dass keine Zerstörung der Gleitflächen entsteht und dabei die Leckageverluste des Federfluids derart gering sind, dass ein Betrieb des Pleuel in einem Verbrennungsmotor möglich ist.

Dies kann beispielsweise dadurch geschehen, dass die den Druckstempel in Betriebsposition umgebende Zylinderwand der Schaftausnehmung derart ausgebildet ist, dass diese im Betrieb unter der durch die Stauchung des Druckstempels verursachten hohen Flächenpressung so nachgibt, dass keine Zerstörung der Gleitflächen entsteht und gleichzeitig die Leckageverluste des Federfluids derart gering sind, dass ein Betrieb des Pleuel in einem Verbrennungsmotor möglich ist. Der Fachmann kann bei Versuchen mittels Variation insbesondere der Parameter Druckstempelmaterial und -abmessungen und Zylinderwandmaterial und -abmessungen, die für den entsprechenden Einsatzzweck, z. B. Motorart, geeignete Auslegung finden, zur Einhaltung der oben genannten Ziele. Konkret kann also z. B. die Zylinderwand dünnwandig sein im Bereich der Drucktempelführung unterhalb des Langlochpleuelauges. Die geringen Leckageverluste bei kleinen Pleuelkräften gehen mit zunehmender Kraft bzw. Druck, also steigendem Stempeldurchmesser, gegen Null. Vergleichbares gilt, wenn der Druckstempel dünner gestaltet wird, sodass er erst unter Last funktionsgerecht an der Zylinderwand anliegt. Die Pleuelstange ist also im Abschnitt unter dem kleinen Pleuelauge als Dehnzylinder ausgeführt, um hoher Flächenpressung durch wachsenden Durchmesser des Druckstempels bei großer Kraft ausweichen zu können.

Ist die dünnwandige Ausführung der Zylinderwand aus Gründen der Festigkeit der Pleuelstange nicht oder unzureichend möglich, dann bietet sich ergänzend oder sogar alternativ diese erfindungsgemäße Lösung zum Entgegenwirken der Zunahme des Stempeldurchmessers: Es wird vorgeschlagen, den Druckstempel in sehr geringem Maß, z. B. einige µm konisch auszuführen, wobei der kleiner Durchmesser gegen das Federfluid gerichtet ist. Im Lastfall wirkt das Fluid im Keilspalt zwischen Zylinderwand und konischem Druckstempel bei hohem Druck der Dehnung des Druckstempels entgegen. So kann man vermeiden, dass die Flächenpressung den zulässigen Grenzwert überschreitet. Die Zylinderwandstärke kann daher optimiert werden in Bezug auf die Pleuelbelastung ohne Rücksicht auf die Stauchung des Druckstempels. Die Konizität ist also derart auszulegen, dass im Betrieb das Fluid im Keilspalt zwischen Zylinderwand und konischem Druckstempel bei hohem Druck der Dehnung des Druckstempels derart entgegenwirkt, dass durch die Stauchung des Druckstempels verursachte und zu Verschleiß führende hohe Flächenpressungen vermieden werden; und gleichzeitig die Leckageverluste des Federfluids derart gering sind, dass ein Betrieb des Pleuel in einem Verbrennungsmotor möglich ist.

Es wird auch vorgeschlagen, den Druckstempel in der Schaftausnehmung mit größerem Spiel, beispielsweise Passung H7, einzusetzen und lediglich mit einem O-Ring abzudichten. Dieser besteht aus einer Stahl- oder Nichteisenlegierung, welche vorzugsweise vergütet auf hohe Elastizität und hohe Streckgrenze ist. Im Betrieb gleitet der O-Ring mit Vorspannung auf dem gehärteten und beschichteten Druckstempel. Fixiert ist der O-Ring, bzw. evtl. mehrere davon, durch Einschrauben oder Einpressen in eine jeweilige Ringnut in der Schaftausnehmung. Ein entsprechender Auslegung dichtet der O-Ring die Hydrofeder ohne Leckage bis zu 5 kbar. Diese Konstruktion kann als Schlüsselelement für den Aufbau einer Kolbenpumpe für höchste Drücke dienen z.B. für Common Rail, was hiermit ausdrücklich beansprucht wird.

Vorzugsweise hat der O-Ring innen zur Schmierung ein Feinstgewinde bzw. bildet eine Labyrinthdichtung. Dieses ist, wie üblich, so ausgelegt, dass praktisch keine Leckage auftritt und dient nur der Schmierung.

Statt eines O-Ringes oder zusätzlich wird weiter vorgeschlagen, den Druckstempel durch hydraulische Dehnung in der Schaftausnehmung gegen das Fluid abzudichten. Zu diesem Zweck ist der Druckstempel zumindest im Dichtbereich, z. B. im Bereich des O-Ringes, mit einem Hohlraum versehen uns derart ausgelegt, dass unter der Wirkung des hohen Druckes des Fluids, die derart verdünnte Wand des Hohlraumes gedehnt wird und somit abdichtet. Der Hohlraum ist vorzugsweise über eine Bohrung mit geringerem Durchmesser mit der dem Fluid verbunden.

Alternativ wird vorgeschlagen in eine erweiterte Schaftausnehmung einen dünnwandigen Metallzylinder, der den Druckstempel eng umgibt, nur am Eingang der oben offenen Schaftausnehmung zu fixieren. Der frei in der erweiterten Schaftausnehmung hängende dünnwandige Zylinder wird von außen also unter Last durch das Fluid im Spalt zwischen Zylinder und Innenwand gegen den Druckstempel gedrückt.

Die oben genannten Auslegungen ermöglichen einerseits eine in Längsachsenrichtung erfolgende Beweglichkeit und ist andererseits eng genug, damit der Druckstempel spielfrei bzw. abgedichtet gelagert wird.

Vorzugsweise ist eine durchgehende Pleuelstange vorgesehen, bei der das obere Pleuelauge eine Ausnehmung aufweist, in die ein federnd gelagerter Druckstempel in Pleuellängsrichtung eingesetzt werden kann. Ein durch das obere Pleuelauge gesteckter Bolzen, zum Beispiel als Befestigung für einen Kolben für einen Kolbenverbrennungsmotor, ist somit im oberen Pleuelauge befestigt, wobei der obere Anschlagpunkt des Bolzens starr durch die obere Wandung des oberen Pleuelauges vorgegeben ist und der Bolzen nach unten hin von dem federnd gelagerten Druckstempel aufgenommen wird. Die zur beabsichtigten Vergrößerung des oberen Totraumvolumens erforderliche Relativbewegung zwischen dem Kolben und dem unteren Pleuelauge wird dadurch ermöglicht. Im Vergleich zum Stand der Technik wirken auf das federnde Element, nämlich dem im wesentlichen im Inneren der Pleuelstange gelagerten Druckstempel, keinerlei Querkräfte. Die Relativbewegung erfolgt daher belastungs-, reibungs- und verschleißärmer als bei den zweiteiligen Federpleuelstangen des oben gewürdigten Standes der Technik. Alternativ kann die Schaftausnehmung nach unten, d. h. im Bereich der Halbschale des unteren großen Pleuelauges offen sein, und wird anschließend verschlossen, wie später ausgeführt.

Das obere Pleuelauge, welches in der Regel den Kolben trägt und auch kleines Pleuelauge genannt wird, ist als sich im Pleuelstangenlängsrichtung bzw. Federwegrichtung erstreckendes Langloch ausgebildet. Dadurch sind der obere und der untere Anschlagpunkt der Relativbewegung fest durch die Geometrie des Pleuelauges vorgegeben, wobei der untere Anschlagpunkt wegen der auf dem im oberen Langloch eingesetzten federnd gelagerten Bolzen zweckmäßigerweise bei normalen Bedingungen nicht erreicht wird.

Die bevorzugte Ausgestaltung mit einer Ausnehmung in dem oberen Pleuelauge, die mit der Schaftausnehmung fluchtet, ermöglicht erst die Montierbarkeit dieses federnden Pleuels.

Erfindungsgemäß wird zunächst die Pleuelstange als solche, d.h. ohne eingesetzten Druckstempel, gefülltes Fluid und Kolbenbolzen beansprucht. Eine solche Pleuelstange ist das wesentliche Teil zur Realisierung der Erfindung.

Das untere Ende des Stempels dient als Dichtung gegenüber dem Fluid. Dazu ist es aus einem Werkstoff, der gegenüber der Schaftausnehmung und/oder dem Stempel eine größere Elastizität aufweist. Dadurch erfolgt ein vollständiger Abschluss des Stempels unter Druck. Üblicherweise ist die Pleuelstange und damit auch die Oberfläche der Schaftausnehmung aus Stahl, so dass als Dichtung Werkstoffe mit guten Gleiteigenschaften, die elastischer als Stahl sind, in Frage kommen, wie z. B. Bronze oder Aluminium. Die Dichtung wird auf übliche Weise mit dem Schaft verbunden, z. B. durch Anlöten, Einpressen, etc.

Motoröl ist als Fluid bzw. Federfluid bevorzugt, da der Ölkreislauf des Motors genutzt werden kann, also keine separate Fluidversorgung nötig ist.

Der große Hub der Hydrofeder erlaubt neue Verfahren zur motorischen Verbrennung in Kolbenmaschinen zur Verbesserung des thermischen Wirkungsgrades bei weniger Schadstoffausstoß. Die Einstellung der Federkonstante geschieht über die Größe des Ölvolumens. Beispielsweise kann mit einen 1 kg schweren Kolben die Hydrofeder der Dynamik des Kolbenmotors bis 20.000 U/min folgen.

Besonders wegen der großen Abstandsänderung zwischen Kurbelzapfen und Kolbenbolzen sind neue Verfahren der motorischen Verbrennung möglich, die hiermit ebenfalls beansprucht werden. Aufgehoben ist der Zwang mit hohem Gasdruck den oberen Totpunkt zu überschreiten und man vermeidet den verlustreichen Einsatz kinetischer Energie zur Steigerung von Druck und Gastemperatur. Weniger Energieverlust bringt folgendes erfindungsgemäße Verfahren: Mit gesteuerten Einspritzdüsen wird weit vor dem oberen Totpunkt der Treibstoff eingespritzt, z. B. zwischen 100° und 10°, insbesondere zwischen 45° und 10° und insbesondere vorzugsweise zwischen 30° und 10° vor dem oberen Totpunkt. Während der weiteren Verdichtung lichtet sich der Treibstoffnebel daher und führt zu zumindest teilweisem Verdampfen der Flüssigkeitströpfchen. Es kommt zu einer verbesserten, im Wesentlichen vollständigen Durchmischung von Treibstoffdampf und Sauerstoff. Kurz, z. B. zwischen 25° und 10, vorzugsweise zwischen 15° und 10 insbesondere zwischen 12° und 9° vor dem oberen Totpunkt zündet die Flamme in einer Art Volumenverbrennung und statt großem Druck und hoher Reibung an der Kurbelwelle wird die Hydrofeder gespannt. In dem so vergrößerten Totvolumen bleibt die Temperatur niedriger, wobei wenig Ruß, kaum CO und praktisch kein NOₓ gebildet wird. Nach dem oberen Totpunkt bleibt der Gasdruck bis zu großem Kurbelwinkel durch die sich streckende Feder erhalten. Es entsteht ein hohes Drehmoment, das erst abnimmt bei entspannter Feder mit Beginn der adiabatischen Expansion. Der gesamte Prozess bewirkt einen hohen thermischen Wirkungsgrad bei wenig Schadstoffausstoß. Die Druck- bzw. Kraftverhältnisse werden durch die erfindungsgemäße Federpleuelstange deutlich verändert und zwar abgesenkt bis unter die Hälfte der Drücke/Kräfte in Dieselmotoren.

Die Absenkung der Spitzendrücke/-kräfte erlaubt eine leichtere Bauweise der Maschine. Die schwere Bauweise der Dieselmaschine wird also nicht mehr benötigt und eine Neukonstruktion kann entfallen, weil die Festigkeitseigenschaften der Ottomaschine hinreichend für den Betrieb als Dieselmaschine unter Verwendung der Federpleuelstange sind. Umweltschonend wird sowohl Material als auch Treibstoff gespart. Bei jeder Umdrehung reagiert das erfindungsgemäß Federpleuel mit variabler Verdichtung auf den Last- bzw. Betriebszustand des Motors. Klopfen bzw. Nageln beim Otto- bzw. Dieselmotor wird verhindert.

Vorzugsweise ist der Kolbenbolzen, das heißt der in das obere Pleuelauge eingesetzte Bolzen zur Befestigung des Kolbens mit einer senkrecht zu seiner Längsachse verlaufenden Ausnehmung zur Aufnahme des oberen Endes des Druckstempels versehen. Dies fixiert den Kolbenbolzen gegen seitliches Verschieben.

Zur Reduktion der bei der Relativschwenkbewegung zwischen Kolben und Pleuelstange auftretenden Reibung kann die Pleuelstange im Bereich des oberen Pleuelauges reibungsmindernde Komponenten aufweisen, beispielsweise eine Beschichtung mit guten Gleiteigenschaften, gleitende Oberfläche oder eine über den Bolzen gestülpte Lagerbuchse zur Reduktion der Reibung bei der Auf- und Abbewegung des Bolzens im oberen Pleuelauge.

Vorzugsweise ist der Kolbenbolzen rohrartig aufgebaut, zur Aufnahme eines Innenbolzens. Dieser kann bei in den Kolbenbolzen eingesetztem Druckstempel seitlich in den rohrartigen Kolbenbolzen eingeschoben werden, wobei am oberen Ende des Druckstempels Hinterschneidungen vorgesehen sind, hinter die entsprechend geformte Hinterschneidungen im Innenbolzen greifen können. Somit sind Druckstempel und Kolbenbolzen - und somit auch der Kolben - formschlüssig miteinander verbunden. Somit ist ein Ausgleich von zwischenzeitlichen Fluidverlusten über das später beschriebene Kugelventil möglich.

Vorzugsweise ist der Innenbolzen als Last-Brücke ausgelegt. Darunter wird verstanden, dass am Innenbolzen außen verdickte Enden, also im Bereich der Kolbenlager, vorgesehen sind, so dass der rohrartige Kolbenbolzen weniger Biegemoment aufnehmen muss. Um das Biegemoment am Kolbenbolzen zu reduzieren, sorgt die Last-Brücke mit ihren verstärkten Enden für die Teilung der Kraft, die vom Gasdruck auf den Kolben über den Kolbenbolzen auf den Druckstempel übertragen wird. Die Last-Brücke ist so ausgelegt, dass bei maximaler zu erwartender Last, z. B. 3 Tonnen bei einem PKW-Diesel Motor, die Brücke lediglich bis zum Anliegen an der Innenwand des rohrartigen Kolbenbolzens durchbiegt. Der erfindungsgemäß beschriebene Kolbenbolzen mit Innenbolzen verhindert ein Verklemmen des Druckstempel bei Querkräften. Der Druckstempel gewinnt daher Freiheitsgrade. Mit einem Sicherungsmittel, z. B. Sprengring, ist die Last-Brücke gegen den Kopf des Druckstempels gesichert.

Es weicht nicht von der Erfindung ab, wenn der Kolbenbolzen aus mehr oder weniger Komponenten besteht, z. B. die Lagerbuchse einstückig mit dem Kolbenbolzen verbunden ist, solange die oben genannten Wirkungen erzielbar sind.

Vorzugsweise sind Drehmomente vom Druckstempel fernzuhalten. Dazu kann der Kolbenbolzen zwei Schlüssel-Flächen aufweisen, die im Langlochpleuelauge auf und ab gleiten können. Das durch Reibung zwischen Kolbenbolzen und Kolben herrührende Drehmoment wird so vom Druckstempel ferngehalten. Auch dabei kann die Führungsfläche am Langloch und/oder die Schlüsselfläche am Kolbebolzen mit reibungsmindernden Materialen versehen sein, z. B. Bronceflächen oder - beschichtungen.

Vorzugsweise ist mittels Feder oder Fluid die Pleuelstange derartig vorgespannt, dass der Druckstempel die Oberseite des Kolbenbolzens bereits im Ruhezustand gegen die obere innere Wand des Langlochs drückt. Dadurch hat der erfindungsgemäße Pleuel im wesentlichen die Eigenschaften eines starren Pleuels und gibt lediglich bei Extrembelastungen im oberen Totpunkt nach. Der Druck soll dabei in etwa halbiert werden, z. B. von 80 auf 40 bar. Außerdem ist die Gefahr erheblicher Beschädigungen des Motors beim Reißen bzw. bei Desynchronisation der Steuerkette bzw. des Zahnriemens geringer, da beim Kontakt des Ventil mit dem Kolben der Kolben federnd gelagert ist.

Durch den vorzugsweisen Einbau einer Feder, insbesondere Schraubenfeder, in das Fluidvolumen erhält das Federpleuel Notlaufeigenschaft z.B. bei Ölverlust.

Vorzugsweise ist zum Ausgleich von zwischenzeitlichen Fluidverlusten ein Kugelventil oder dergleichen im Bodenbereich der Schaftausnehmung vorgesehen. Die Schaftausnehmung steht also über ein Ventil mit der Umgebung, hier dem Fluidvorrat, z. B. Ölsumpf des Motors, in Verbindung. Das Kugelventil ermöglicht das Nachfließen von Fluid im Ladehub und den Ausgleich von Leckage. Dabei ist der Druckstempel derart mit dem Kolben über oben beschriebene Bauteile zu verbinden, das auch Zugkräfte vom Kolben auf den Druckstempel übertragen werden können.

Vorzugsweise ist in der unteren Schaftausnehmung eine derart große Öffnung, vorgesehen, durch die der Druckstempel von unten eingebracht werden kann. Somit entfällt die Notwendigkeit der weiteren Ausnehmung im oberen Dach des kleinen Pleuelauges. Die untere Öffnung kann verschlossen werden durch das Kugelventil, das beispielsweise eingeschraubt wird. Das obere Pleuelauge bleibt somit besonders stabil.

Weitere Vorteile ergeben sich aus der folgenden Beschreibung und der beigefügten Zeichnung. Ebenso können die vorstehend genannten und noch weiter ausgeführten Merkmale erfindungsgemäß jeweils einzeln oder in beliebigen Kombinationen miteinander verwendet werden. Die erwähnten Ausführungsbeispiele sind nicht abschließend zu verstehen und haben beispielhaften Charakter. Dabei zeigt
- Fig. 1: einen erfindungsgemäßen Pleuel in der Aufsicht;
- Fig. 2: einen erfindungsgemäßen Pleuel in der Seitenansicht;
- Fig. 3: eine Abwandlung des Kugelventils.
- Fig. 4: eine Detailansicht einer Ausgestaltung der Fluidkammer: und
- Fig. 5: eine Detailansicht einer weiteren Ausgestaltung der Fluidkammer.

Das obere kleine Pleuelauge **1,** welches den Kolbenbolzen **2** mit einer Lagerbuchse **9** mit zwei Gleitflächen sowie eingesetzen Innenbolzen **4** trägt, ist als Langloch ausgeführt. Den Kolbenbolzen **2, 4** führt also hier eine Lagerbuchse **9** mit zwei Gleitflächen in dem Langloch. Je nach Größe der von oben auf den Kolbenbolzen **2** ausgeübten Kraft, überträgt der Kolbenbolzen **2** die auf den Motorkolben übertragene Gaskraft über den in den rohrartigen Kolbenbolzen **2** eingesetzten Innenbolzen **4** weiter auf den Druckstempel **3** und somit das Fluid **62.** Dabei handelt es sich um einen in Längsrichtung des Pleuels wirksamen Energiespeicher, vorzugsweise aus normalem Motoröl bestehend.

Mit der Sacklochbohrung bzw. Schaftausnehmung **61** fluchtet eine weitere Ausnehmung **11** im oberen Dach des oberen Pleuelauges. Dieses erst gewährleistet die Montierbarkeit des Druckstempels **3.**

Der rohrartige Kolbenbolzen **2** bzw. Lagerbuchse **9** weist eine senkrecht zu seiner Längsachse verlaufenden Ausnehmung **21** bzw. **91** zur Durchführung des oberen Endes des Druckstempels **3** auf und fixiert den Kolbenbolzen gegen seitliches Verschieben. Der Innenbolzen **4** kann bei eingeführtem Druckstempel seitlich in den rohrartigen Kolbenbolzen **2** eingeschoben werden, wobei am oberen Ende des Druckstempels **3** Hinterschneidungen **31** vorgesehen sind, hinter die entsprechend geformte Hinterschneidungen **41** im Innenbolzen **4** greifen. Druckstempel und Kolbenbolzen sind formschlüssig miteinander verbunden. Dies verhindert eine Relativbewegung zwischen Kolbenbolzen **2** und Druckstempel **3,** was zu erhöhter dynamischer Belastung führen würde.

Der Innenbolzen **4** hat außen verdickte Enden **42,** also im Bereich der Kolbenlager, so dass der rohrartige Kolbenbolzen **2** weniger Biegemoment aufnehmen muss.

In Längsachse des Pleuels ist die Schaftausnehmung **61** eingebracht, die nach unten durch eine Kugel vor einer Feinbohrung **8** verschlossen ist und die hier im Konus gelagert dichtet. Der Druckstempel **3** wird durch die Bohrung **11** in die Schaftausnehmung **61** so tief eingeführt, dass bei Montage des Kurbeltriebes der Kolbenbolzen **2** mit Lagebuchse **9** seitlich ungehindert eingeschoben werden kann. Die Feinbohrung mit Kugel **8** ermöglicht nach Montage des Kolbenbolzens bzw. Kolbens ein Befüllen des Volumens **62** mit Motoröl, wobei der bereits eingebaute Druckstempel **3** in die dafür vorgesehenen Ausnehmungen **21, 91** in der Lagerbuchse **9** und Kolbenbolzen **2** gedrückt wird, bis der Druckstempel die Achse des Kolbenbolzens erreicht hat. Damit ist der Weg frei für die Arretier-Last-Brücke **4,** die in den Kolbenbolzen **2** eingeschoben wird. Sie arretiert den Druckstempel **3** im Kolbenbolzen gegen die in der Pleuelachse oszillierenden Kräfte. Im betriebsfähigen Zustand ist die Feinbohrung mit Kugel **8** mit üblichen Mitteln druckdicht verschlossen.

Der Pleuelstangenabschnitt **5,** also die den Druckstempel **3** umgebende Zylinderwand, ist hier als Dehnzylinder ausgeführt.

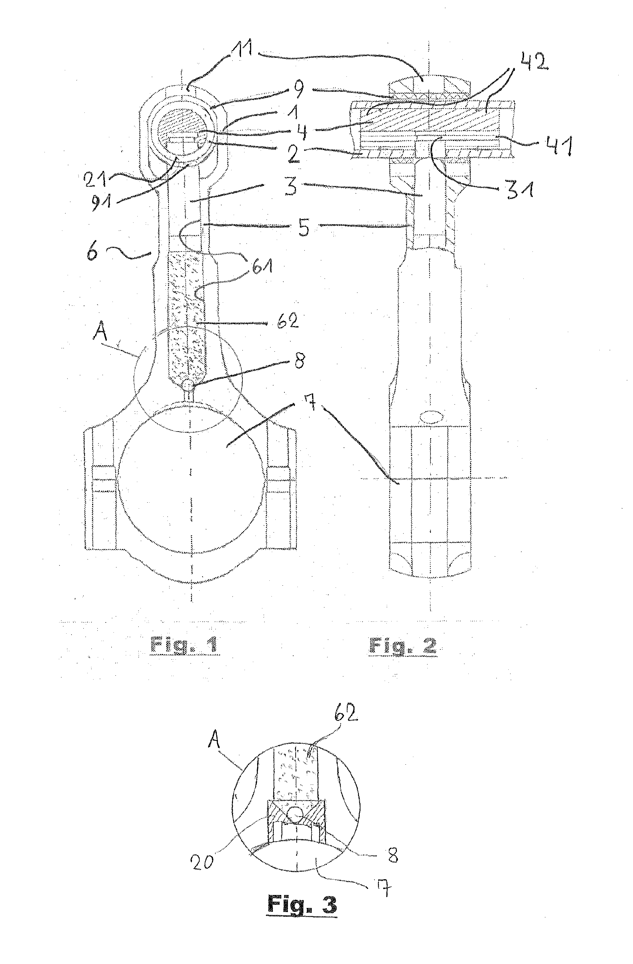

In weiterer Ausgestaltung der Erfindung gemäß Fig. **3** wird auf die weitere Ausnehmung **11** im oberen Dach des oberen Pleuelauges verzichtet. Ersatzweise erfolgt die Einbringung der Schaftausnehmung **61** von der Halbschale des großen Pleuelauges **7** aus als untere Durchgangsbohrung. Dann allerdings muss nach der Bearbeitung der Schaftausnehmung **61** und nach einfacherer Montage der Pleuelstange im Kolben und nach Füllung des Volumens **62** mit Motoröl eine Verschlussschraube **20** mit z. B. Innensechskant und Kugelventil mit Kugel **8** eingebracht werden. Das große Pleuelauge **7** ist sonst in üblicher Weise ausgeführt.

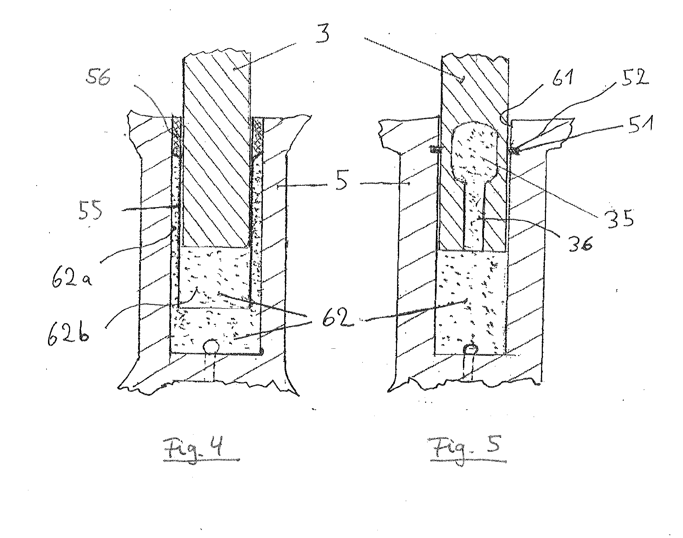

In Fig. **5** ist der Druckstempel **3** im Bereich des Pleuelstangenabschnitts **5** nicht an der Zylinderwand **61** fluidabdichtend anliegend. Vielmehr ist in der Zylinderwand **61** eine Ringnut **51** vorgesehen, in welcher ein Dichtung **52,** hier ein vorgespannter O-Ring, eingesetzt ist. Dieser gleitet trotz der hochduckdichten Dichtung **52** über den Druckstempel **3.** Der O-Ring und/oder der Druckstempel können dabei gehärtet und reibungsmindernd beschichtetet sein.

Die metallischen O-Ringe **5** in der Zylinderwand dichten den Druckstempel **3** leckagefrei bis **5** kbar ab.

Alterativ oder zusätzlich zur Abdichtung mittels eines O-Ringes wird der Druckstempel **3** durch hydraulische Dehnung in der Schaftausnehmung **61** gegen das Fluid **62** abgedichtet. Der Druckstempel **3** ist zumindest im Dichtbereich mit einem Hohlraum **35** versehen der derart ausgelegt ist, dass unter der Wirkung des hohen Druckes des Fluids, die derart verdünnte Wand des Druckstempels gedehnt wird und somit abdichtet. Der Hohlraum **35** ist hier über eine Bohrung **36** mit geringerem Durchmesser mit der dem Fluid verbunden. Dies ermöglicht, dass der Hohlraum so klein wie zur Dichtfunktion notwendig ausfallen kann und der Stempel ausreichend stabil bleibt.

Fig. **4** zeigt, dass in einer erweiterten Schaftausnehmung **61** ein dünnwandiger unten geschlossener Metallzylinder **55** eingesetzt ist, der den Druckstempel **3** eng umgibt. Dieser ist nur am Eingang fixiert, beispielsweise durch einen in die Schaftausnehmung befestigten, vorzugsweise eingepressten oder eingelöteten, Ring **56.** Das Fluid **62a** im Dichtbereich außerhalb des Metallzylinders **55** hat somit den gleichen Druck wie das zwischen Metallzylinder **55** und Druckstempel **3** eingeschlossene federwirksame Fluid **62b.** Die Abdichtung ist daher leckagefrei.

## Patentansprüche

1. Pleuelstange mit einem sich in Pleuelstangenlängsrichtung erstreckenden länglichen langlochartigen oberen Pleuelauge (1) und einem unteren Pleuelauge (7), das über einen in Pleuelstangenlängsrichtung sich erstreckenden Schaft (6) starr mit dem oberen Pleuelauge verbunden ist,
wobei in dem Schaft eine sich in Pleuelstangenlängsrichtung erstreckende nach oben offene Schaftausnehmung (61) vorgesehen ist, in die eine Feder (62), vorzugsweise ein Federfluid, insbesondere vorzugsweise ein Motoröl, derart eingebracht werden kann, dass ein in die Schaftausnehmung eingesetzter Druckstempel (3) in Pleuelstangenlängsrichtung federnd beweglich gelagert werden kann.

2. Pleuelstange nach einem der vorherigen Ansprüche, **dadurch gekennzeichnet, dass** die den Druckstempel (3) in Betriebsposition umgebende Zylinderwand (5) der Schaftausnehmung (61) und der Druckstempel (3) derart ausgebildet und aufeinander abgestimmt sind, dass diese im Betrieb unter der durch die Stauchung des Druckstempels verursachten hohen Flächenpressung sich so verformen, dass keine Zerstörung der Gleitflächen entsteht und dabei die Leckageverluste des Federfluids (62) derart gering sind, dass ein Betrieb des Pleuel in einem Verbrennungsmotor möglich ist.

3. Pleuelstange nach einem der vorherigen Ansprüche, **dadurch gekennzeichnet, dass** die den Druckstempel (3) in Betriebsposition umgebende Zylinderwand (5) der Schaftausnehmung derart ausgebildet ist, dass diese im Betrieb unter der durch die Stauchung des Druckstempels verursachten hohen Flächenpressung so nachgibt, dass keine Zerstörung der Gleitflächen entsteht und gleichzeitig die Leckageverluste des Federfluids (62) derart gering sind, dass ein Betrieb des Pleuel in einem Verbrennungsmotor möglich ist.

4. Pleuelstange nach einem der vorherigen Ansprüche, **dadurch gekennzeichnet, dass** der Druckstempel in sehr geringem Maß, vorzugsweise um 2-50 µm, insbesondere vorzugsweise um 3-5 µm und ferner vorzugsweise ca. 3,5 - 4,4 µm konisch ausgeführt ist, wobei der kleinere Durchmesser gegen das Federfluid gerichtet ist, derart, dass im Lastfall das Federfluid in den Keilspalt zwischen Zylinderwand (5) und konischem Druckstempel (3) bei hohem Druck eindringen kann und der Dehnung des Druckstempels derart entgegenwirken kann, dass durch die Stauchung des Druckstempels verursachte und zu Verschleiß führende hohe Flächenpressungen vermieden werden kann.

5. Pleuelstange nach einem der vorherigen Ansprüche, **dadurch gekennzeichnet, dass** zur Abdichtung gegen das Fluid zwischen Zylinderwand und Druckstempel eines oder mehrere der folgenden Dichtelemente vorgesehen sind:
- gegen der Druckstempel vorgespannter metallischer O-Ring in der Zylinderwand, vorzugsweise mit nach innen gerichtetem Feinstgewinde als Labyrinthdichtung;
- Hohlräume in Druckstempel zur Bildung eines hydraulisch dehnbaren Druckstempels;
- dünnwandiger einseitig befestigter Zylinder um den Druckkolben.

6. Pleuelstange nach einem der vorherigen Ansprüche, **dadurch gekennzeichnet, dass** das obere Pleuelauge (1) eine mit der Schaftausnehmung (61) fluchtende Ausnehmung (11) aufweist, derart, dass durch die Ausnehmung (11) der Druckstempel (3) in die Schaftausnehmung eingesetzt werden kann.

7. Pleuelstange nach einem der vorherigen Ansprüche, **dadurch gekennzeichnet, dass** die Länge der geraden Flanken des Langlochs derart sind, dass bei Einbau der Pleuelstange in einen Kolbenverbrennungsmotor die Flanken mindestens die zum Erreichen einer gewünschten Totraumvergrößerung des Kolbenverbrennungsmotors benötigte Länge haben.

8. Pleuelstange nach einem der vorherigen Ansprüche, mit einem in die Schaftausnehmung eingesetzten Druckstempel (3), wobei die Schaftausnehmung mindestens eine derartige Länge aufweist, dass bei Abwesenheit der Feder in das Langloch ein Kolbenbolzen von dem Durchmesser des Langlochs seitlich einschiebbar ist.

9. Pleuelstange nach einem der vorherigen Ansprüche, mit einem in dem oberen Pleuelauge von einer Seite eingeschobenen Kolbenbolzen (2,9).

10. Pleuelstange nach einem der vorherigen Ansprüche, **dadurch gekennzeichnet, dass** der Kolbenbolzen (2,4,9) eine senkrecht zur Bolzenlängsachse verlaufende Ausnehmung (21, 91) zur Aufnahme des oberen Endes des Druckstempels aufweist.

11. Pleuelstange nach einem der vorherigen Ansprüche, **dadurch gekennzeichnet, dass** im eingebauten Ruhezustand der Pleuelstange der Druckstempel die Oberseite des Kolbenbolzen gegen die obere Innenwand des Langlochs drückt.

12. Pleuelstange nach einem der vorherigen Ansprüche, **dadurch gekennzeichnet, dass** der Bolzen eine gleitende Beschichtung, Oberfläche oder Lagerbuchse (9) aufweist und/oder mit einem am oberen Pleuelauge um eine Achse schwenkbar mittels des Bolzens befestigten Kolben.

13. Pleuelstange nach einem der vorherigen Ansprüche, wobei der Kolbenbolzen Schlüsselflächen aufweist, derart, dass der Bolzen im Langlochpleuelauge auf und ab gleiten kann ohne sich zu drehen, wobei vorzugsweise am Langloch und/oder Schlüsselfläche reibungsmindernde Materialen vorgesehen sind, z. B. Bronceflächen oder -beschichtungen.

14. Kolbenverbrennungsmotor mit in Zylindern geführten Kolben, die an einer Pleuelstange nach einem der vorherigen Ansprüche befestigt sind.

15. Verfahren zum Betreiben im Diesel-Prozess eines Kolbenverbrennungsmotors mit in Zylindern geführten Kolben, die jeder an einer federnden Pleuelstange, insbesondere nach einem der vorherigen Ansprüche, befestigt sind, mit folgenden Schritten:
- Einspritzen des Treibstoffes in den Zylinder vor dem oberen Totpunkt, insbesondere zwischen 100° und 9°, vorzugsweise zwischen 45° und 9° und insbesondere vorzugsweise zwischen 30° und 9° vor dem oberen Totpunkt und
- dabei zumindest teilweises Verdampfen der Treibstofftröpfchen, derart, dass es zu einer verbesserten, im Wesentlichen vollständigen Durchmischung von Treibstoffdampf und Sauerstoff vor der Verbrennung kommt.
